# FASCICULE DE BREVET EUROPEEN

(11) **EP 4 308 846 B1**
(45) Date de publication et mention de la délivrance du brevet: **12.08.2026**
(21) Numéro de dépôt: 22714841.8
(22) Date de dépôt: 15.03.2022
(51) Int. Cl.: F17C 5/06, F04B 19/24, F04B 35/00

(54) **SYSTÈME DE COMPRESSION THERMIQUE D'UN GAZ**
SYSTEM ZUR THERMISCHEN KOMPRESSION EINES GASES
SYSTEM FOR THE THERMAL COMPRESSION OF A GAS

(30) Priorité: 17.03.2021 FR 2102675
(43) Date de publication de la demande: 24.01.2024
(73) Titulaire: Eifhytec, 67000 Strasbourg (FR)
(72) Inventeur: MASTIO, Simon, 67470 NIEDERROEDERN (FR)
(74) Mandataire: Hege, Frédéric
(86) Numéro de dépôt international: PCT/EP2022/056640
(87) Numéro de publication internationale: WO 2022/194837

(56) Documents cités:
- DE-A1- 10 037 163
- ES-A1- 2 259 492
- RU-C2- 2 509 256
- US-A1- 2012 028 140
- US-A1- 2016 201 658

## Description

La présente invention se situe dans le domaine de la compression des gaz. RU2509256C2 divulgue un procédé cyclique de compression thermique d'un gaz.

Elle concerne un système de compression thermique d'un gaz, et notamment du dihydrogène.

Dans un contexte de fort développement des solutions faiblement émissives en dioxyde de carbone, pour la mobilité et le transport de biens et de passagers, le dihydrogène apparait comme un carburant prometteur. Son utilisation, associé à une pile à combustible et à un moteur électrique dans un véhicule, peut représenter une alternative aux carburants fossiles ou à l'utilisation d'accumulateurs électriques couramment utilisés pour l'alimentation de moteurs électriques.

Du fait de sa faible densité volumique, le dihydrogène doit être comprimé jusqu'à une pression de l'ordre de 700 bars pour pouvoir être utilisé comme carburant. Il est habituellement livré dans les stations-services à une pression de 200 bars, puis comprimé sur place dans un compresseur jusqu'à des pressions allant de 450 à 1000 bars.

Ce compresseur est habituellement un compresseur mécanique, ce qui comporte plusieurs inconvénients. Les pièces mobiles induisent des fuites de dihydrogène. Les pistons ne sont pas lubrifiés car cela introduirait des impuretés dans le dihydrogène, ce qui endommagerait la pile à combustible ; les pistons s'usent donc rapidement. En outre, ces compresseurs consomment de l'électricité, ce qui représente un coût significatif et dégrade le bilan environnemental du dihydrogène. Finalement le compresseur mécanique induit de fortes nuisances sonores, ce qui est problématique en particulier pour les stations-services en ville.

Pour répondre à ces problèmes, des compresseurs thermochimiques à hydrures métalliques ont été développés. Des poudres métalliques absorbent du dihydrogène à basse pression, pour obtenir des hydrures métalliques. Ces hydrures sont chauffés, ce qui libère du dihydrogène à haute pression. Ces compresseurs fonctionnent idéalement entre 20 bar et 500 bar. Hors de cette plage de fonctionnement il est difficile de trouver des poudres métalliques permettant d'effectuer la compression à des niveaux de températures compatibles avec les standards industriels. En particulier, pour les très hauts niveaux de pression, l'énergie requise pour augmenter encore la pression est trop importante par rapport à un compresseur mécanique, qui consomme une énergie de l'ordre du rapport entre la pression de sortie et la pression d'entrée. On peut alors combiner un compresseur thermochimique avec un compresseur mécanique pour atteindre les derniers étages de pression.

Alternativement, des compresseurs thermiques existent. Le document US20120028140 propose un compresseur comportant une pluralité de réservoirs reliés en série, la pression montant entre deux réservoirs consécutifs en réchauffant le réservoir amont. Cette méthode ne permet pas d'obtenir des débits élevés et consomme trop d'énergie.

Un objet de la présente invention est de proposer un compresseur efficace en termes de consommation d'énergie, notamment pour des pressions supérieures à 500 bars, sans présenter les problèmes d'usure, de consommation électrique, de bruit et de fuites des compresseurs mécaniques.

La présente invention a pour objet de répondre au moins en partie aux objets précités en proposant un procédé cyclique de compression thermique d'un gaz dans lequel plusieurs réservoirs d'un groupe effectuent un cycle au cours duquel ils effectuent une montée en pression au contact d'un réservoir ou d'une succession de réservoirs plus chauds, puis une descente en pression afin de faire monter en pression d'autres réservoirs plus froids. A cet effet, elle propose un procédé cyclique de compression thermique d'un gaz dans une pluralité de réservoirs d'au moins un groupe d'un système selon l'invention, chaque cycle comportant pour chaque réservoir de chaque groupe les étapes suivantes :
- refroidissement du gaz contenu dans le réservoir et transfert de gaz de la source vers ledit réservoir,
- transfert de gaz d'un réservoir donneur vers ledit réservoir, ledit réservoir donneur étant celui dont le gaz est à la pression la plus basse parmi les réservoirs dudit groupe dont le gaz est à une pression et une température supérieures au gaz dudit réservoir, jusqu'à égalisation des pressions dans ledit réservoir et ledit réservoir donneur, le cas échéant, répétition de cette étape tant qu'il y a un autre réservoir dudit groupe dont le gaz est à une pression et une température supérieures au gaz dudit réservoir,
- réchauffement du gaz contenu dans le réservoir et transfert de gaz dudit réservoir vers la cible,
- transfert de gaz dudit réservoir vers un réservoir receveur, ledit réservoir receveur étant celui dont le gaz est à la pression la plus haute parmi les réservoirs dudit groupe dont le gaz est à une pression et une température inférieures au gaz dudit réservoir, jusqu'à égalisation des pressions dans ledit réservoir et ledit réservoir receveur, le cas échéant, répétition de cette étape tant qu'il y a un autre réservoir dudit groupe dont le gaz est à une pression et une température inférieures au gaz dudit réservoir,
   l'étape de refroidissement du gaz contenu dans le réservoir et transfert de gaz de la source vers ledit réservoir étant effectuée successivement pour chaque réservoir dudit groupe.

Grâce à ces dispositions, le gaz peut être comprimé à une haute pression par compression thermique, ce qui permet d'éviter les problèmes de bruit et d'usure de pièces mécaniques. Ce procédé est particulièrement efficace énergétiquement, la chaleur utilisée pour faire monter la pression dans un réservoir étant utilisée lors de sa descente en pression pour comprimer le contenu d'autres réservoirs, la compression pouvant s'effectuer en cascade.

Selon d'autres caractéristiques :
- ledit procédé peut avoir lieu dans une pluralité de réservoirs de deux groupes, les étapes de refroidissement du gaz contenu dans un réservoir et transfert du gaz de la source pouvant avoir lieu tour à tour vers un des réservoirs d'un groupe, puis vers un des réservoirs de l'autre groupe, ce qui permet d'optimiser le procédé, et notamment de permettre une alimentation du système et une production de gaz comprimé en continu,
- lors de l'étape de transfert de gaz d'un réservoir donneur du même groupe dont le gaz est à une pression et une température supérieures vers ledit réservoir, le gaz transféré peut être refroidi pour réduire la montée en température du contenu dudit réservoir, ce qui permet de conserver l'écart de température entre un réservoir montant en pression et un réservoir descendant en pression, cet écart permettant d'optimiser la compression du gaz dudit réservoir,
- chaque groupe de réservoirs peut comporter au moins trois, de préférence au moins quatre réservoirs, et les deux étapes de transfert être chacune répétées respectivement au moins deux, de préférence au moins trois fois, ce qui permet de faire monter plusieurs étages de pression au gaz, et donc d'obtenir une plus grande élévation de pression pour une différence de température donnée,
- ledit procédé peut comporter en outre une étape de compression du gaz, avant son transfert de la source vers un réservoir, dans un compresseur à hydrures métalliques, ce qui permet de combiner une première compression offrant les avantages du compresseur à hydrures, puis une compression thermique lorsque les hautes valeurs de pression rendent le compresseur à hydrures moins adapté,
- lors de l'étape de refroidissement du gaz contenu dans un premier réservoir, de la chaleur peut être extraite dudit premier réservoir et être utilisée dans l'étape de réchauffement du gaz contenu dans un deuxième réservoir, ce qui permet d'optimiser la consommation en énergie du procédé,
- au moins deux étapes peuvent être réalisées simultanément, une première étape incluant un transfert de gaz entre une première et une deuxième entité, ces deux entités étant la source et un réservoir, deux réservoirs, ou un réservoir et la cible, et une deuxième étape incluant un transfert de gaz entre une troisième et une quatrième entité, ces deux entités étant la source et un réservoir, deux réservoirs, ou un réservoir et la cible, la première, deuxième, troisième et quatrième entités étant quatre entités distinctes, ce qui permet d'optimiser le cycle, plusieurs étapes différentes ayant lieu en même temps dans plusieurs réservoirs différents du système, voire d'un même groupe.
- l'étape de transfert de gaz de la source vers un premier réservoir peut avoir lieu simultanément avec l'étape de transfert de gaz d'un deuxième réservoir vers un réservoir receveur ou vers la cible, ce qui permet d'optimiser le cycle, plusieurs étapes différentes ayant lieu en même temps dans plusieurs réservoirs différents du système, voire d'un même groupe.

La présente invention concerne également un système de compression thermique d'un gaz caractérisé en ce qu'il comporte une source, une cible, et au moins un groupe de réservoirs comprenant chacun au moins deux réservoirs, ledit système comportant un moyen de chauffage et un moyen de refroidissement du contenu de chaque réservoir, chaque groupe comportant encore :
- des moyens de transfert permettant de transférer du gaz directement de ladite source à chaque réservoir et directement de chaque réservoir à ladite cible, et
- pour chaque réservoir dudit groupe, des moyens de transfert bidirectionnels permettant de transférer du gaz directement entre ce réservoir et au moins un autre réservoir dudit groupe.

Grâce à ces dispositions, le gaz peut être comprimé à une haute pression par compression thermique, ce qui permet d'éviter les problèmes de bruit et d'usure de pièces mécaniques, tout en permettant un procédé efficace énergétiquement.

Selon d'autres caractéristiques :
- ledit gaz peut être un dihydrogène, ce qui est un mode de réalisation pertinent de l'invention, le dihydrogène devant souvent être comprimé à des hautes pressions pour être utilisable, notamment dans le transport ; il peut aussi s'agir de N2, O2, CH4 ou Hélium par exemple,
- ledit système peut comporter deux groupes de réservoirs, ce qui permet d'optimiser son fonctionnement, et notamment de permettre une alimentation du système et une production de gaz comprimé en continu,
- ledit système peut comporter au moins trois, de préférence au moins quatre réservoirs dans chaque groupe, ce qui permet de faire monter plusieurs étages de pression au gaz, et donc d'obtenir une plus grande élévation de pression pour une différence de température donnée,
- le moyen de chauffage peut comprendre une source de chaleur fatale comme par exemple une installation de production de dihydrogène par biomasse ou un électrolyseur, ce qui permet de récupérer la chaleur produite, et ainsi réduire les coûts de l'énergie consommée par le système,

- le moyen de refroidissement peut comprendre une source de froid fatal, comme par exemple un stockage de gaz liquéfié ou un retour d'une boucle d'eau glacée, ce qui permet de récupérer le froid disponible, et ainsi réduire l'énergie consommée par le système,
- la source peut comporter une sortie de gaz d'évaporation d'un stockage de dihydrogène liquide, ce qui permet d'apporter du dihydrogène froid au réservoir qui doit être alimenté par la source, et ainsi réaliser un premier palier de compression particulièrement efficace,
- tous les réservoirs d'un même groupe peuvent avoir le même volume, ce qui permet de simplifier le système.

La présente invention sera mieux comprise à la lecture de la description détaillée qui fait suite, en référence aux figures annexées dans lesquelles :
[Fig.1] La [Fig.1] est une vue schématique d'un système de compression thermique d'un gaz selon un mode de réalisation de l'invention,
[Fig.2] La [Fig.2] est une vue schématique des étapes d'un procédé de compression thermique d'un gaz selon le mode de réalisation de la [Fig.1],
[Fig.3] La [Fig.3] est une vue schématique des premières étapes d'un procédé de compression thermique d'un gaz selon un mode de réalisation préféré de l'invention,
[Fig.4] La [Fig.4] est une vue schématique des étapes terminant le procédé commencé en [Fig.3].

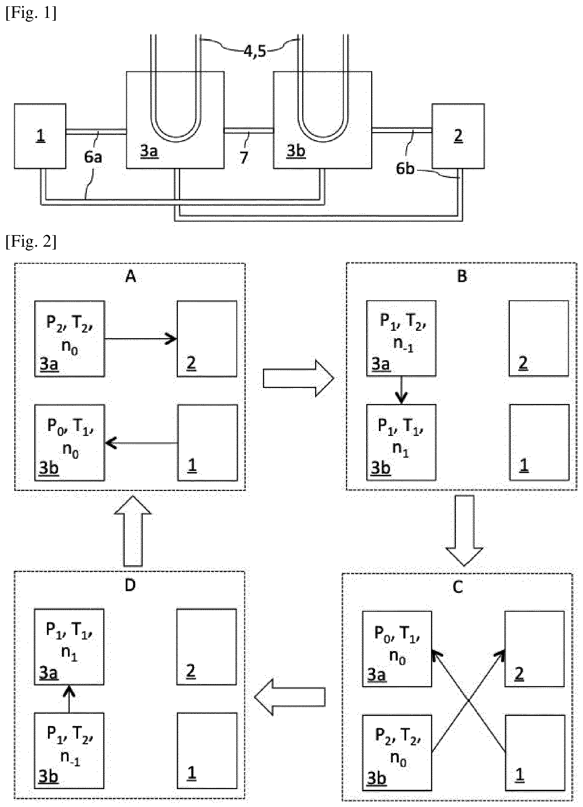

Le système de compression thermique d'un gaz selon l'invention, illustré en [Fig.1], comporte une source 1, une cible 2, et un ou plusieurs groupes de réservoirs 3.

Le système selon l'invention permet de comprimer du gaz à partir d'une source 1, à laquelle le gaz est à une pression P₀, jusqu'à une pression P_{cible}.

Le gaz concerné par l'invention est de préférence du dihydrogène. Il peut toutefois s'agir d'un autre gaz, tel que de l'oxygène ou de l'azote par exemple.

Les réservoirs 3 sont aptes à contenir un certain volume dudit gaz de façon étanche. A l'intérieur d'un groupe, les réservoirs 3 ont tous de préférence le même volume, par exemple 50 litres.

Le système de compression thermique comporte un moyen de chauffage 4 et un moyen de refroidissement 5 du contenu de chaque réservoir 3. Les moyens de chauffage 4 et refroidissement 5 permettent par exemple d'amener un fluide caloporteur au contact du contenu de chaque réservoir 3. Si le fluide caloporteur est plus chaud, respectivement plus froid, que le contenu d'un réservoir 3, il peut être utilisé pour réchauffer, respectivement refroidir, ledit contenu.

Le moyen de chauffage 4 peut également être une résistance électrique plongée dans le réservoir.

Le moyen de chauffage 4 peut être relié à un électrolyseur ou une unité de production de dihydrogène par biomasse. Ainsi si le gaz est du dihydrogène, la chaleur générée pour produire ce dihydrogène peut être récupérée dans le système de compression thermique. Selon le lieu d'installation du système selon l'invention, d'autres sources de chaleur fatale disponibles localement peuvent être connectées au moyen de chauffage pour réduire les coûts de l'énergie consommée. Il peut s'agir par exemple d'un lieu de collecte de déchet, ou de tout autre site industriel dans lequel de la chaleur est produite.

Le système de compression thermique comporte encore des moyens de transfert 6a permettant de transférer du gaz directement de la source 1 à chaque réservoir 3 d'un groupe, et des moyens de transfert 6b permettant de transférer du gaz directement de chaque réservoir 3 d'un groupe à la cible 2. Un transfert direct désigne ici un transfert qui ne passe ni par un autre réservoir 3 du même groupe ou d'un autre groupe, ni par la source 1 ou la cible 2.

Le système de compression thermique comporte enfin des moyens de transfert bidirectionnels 7 permettant de transférer du gaz directement de chaque réservoir d'un groupe, vers chaque autre réservoir du même groupe. Un transfert direct désigne ici un transfert qui ne passe ni par un autre réservoir 3 du même groupe ou d'un autre groupe, ni par la source 1 ou la cible 2. Ainsi en considérant n'importe quelle paire de réservoirs 3 d'un même groupe, il est possible de transférer du gaz directement entre ces deux réservoirs 3, dans les deux directions.

La présente invention concerne un procédé cyclique de compression thermique d'un gaz dans une pluralité de réservoirs 3 d'au moins un groupe. Chaque cycle comporte pour chaque réservoir 3a de chaque groupe les étapes suivantes :
- refroidissement du gaz contenu dans le réservoir 3a, à une température froide T₁, et transfert de gaz de la source 1 vers ledit réservoir 3a. A l'issue de cette étape, le réservoir 3a contient du gaz à une pression P₀ et une température T₁.
- transfert de gaz d'un autre réservoir donneur 3 vers ledit réservoir 3a. Le réservoir donneur 3 est celui dont le gaz est à la pression la plus basse parmi les réservoirs 3 du même groupe dont le gaz est à une pression et une température supérieures au gaz contenu dans ledit réservoir 3a. Le transfert a lieu automatiquement à l'ouverture du moyen de transfert bidirectionnel 7 entre le réservoir 3a et le réservoir donneur 3, jusqu'à égalisation des pressions dans le réservoir 3a et le réservoir donneur 3. C'est lors de cette étape que le gaz contenu dans ledit réservoir 3a est comprimé. A l'issue de la première occurrence de cette étape, le réservoir 3a contient du gaz à une pression P₁ et une température T₁. Cette étape peut être répétée plusieurs fois, tant qu'il y a un autre réservoir 3 dudit groupe dont le gaz est à une pression et une température supérieures que le gaz contenu dans ledit réservoir 3a. L'étape peut par exemple être répétée deux fois si le groupe comporte trois réservoirs 3, ou trois fois si le groupe comporte quatre réservoirs 3. Chaque répétition de cette étape permet au réservoir 3a de monter un étage de pression. A l'issue de cette étape, le réservoir 3a contient du gaz à une pression P_{K} et une température T₁, avec K égal au nombre de répétitions de l'étape de transfert.
- réchauffement du gaz contenu dans le réservoir 3a, à une température chaude T₂, ce qui permet de monter un dernier étage de pression, et transfert de gaz dudit réservoir 3a vers la cible 2. A l'issue de cette étape, le réservoir 3a contient du gaz à une pression P_{K+1} et une température T₂. La pression P_{K+1} est proche de, ou égale à la pression P_{cible}.
- transfert de gaz dudit réservoir 3a vers un autre réservoir receveur 3. Le réservoir receveur 3 est celui dont le gaz est à la pression la plus haute parmi les réservoirs 3 du même groupe dont le gaz est à une pression et une température inférieures au gaz dudit réservoir 3a. Le transfert a lieu automatiquement à l'ouverture du moyen de transfert bidirectionnel 7 entre le réservoir 3a et le réservoir receveur 3, jusqu'à égalisation des pressions dans ledit réservoir 3a et ledit réservoir receveur 3. A l'issue de la première occurrence de cette étape, le réservoir 3a contient du gaz à une pression proche ou égale à P_{K} et une température T₂. Cette étape peut être répétée plusieurs fois, tant qu'il y a un autre réservoir 3 dudit groupe dont le gaz est à une pression et une température inférieures au gaz du réservoir 3a. L'étape peut par exemple être répétée deux fois si le groupe comporte trois réservoirs 3, ou trois fois si le groupe comporte quatre réservoirs 3. Chaque répétition de cette étape permet au réservoir 3a de faire monter à un autre réservoir 3 du même groupe un étage de pression. A l'issue de cette étape et de sa répétition jusqu'au bout, le réservoir 3a contient du gaz à une pression proche ou égale à P₁ et une température T₂.

Dans le cas où tous les réservoirs 3 du groupe ont un volume identique, on peut également déterminer la quantité de gaz dans le réservoir 3 à chaque étape :
- à l'issue de l'étape de refroidissement et transfert de la source 1, le réservoir 3a contient n₀ moles de gaz,
- à l'issue d'une occurrence de l'étape de transfert d'un réservoir donneur 3 vers ledit réservoir 3a, ledit réservoir 3a contient n₁ moles de gaz,
- à l'issue de toute l'étape de transfert d'un ou plusieurs réservoirs donneurs 3 vers ledit réservoir 3a, ledit réservoir 3a contient n_{K} moles de gaz,
- à l'issue de l'étape de réchauffement et transfert vers la cible 2, le réservoir 3a contient n_{K-1} moles de gaz,

- à l'issue d'une occurrence de l'étape de transfert dudit réservoir 3a vers un réservoir receveur 3, ledit réservoir 3a contient n_{K-2} moles de gaz,
- à l'issue de toute l'étape de transfert dudit réservoir 3a vers un ou plusieurs réservoirs receveurs, ledit réservoir 3a contient n₋₁ moles de gaz.

L'étape de refroidissement du gaz contenu dans le réservoir et transfert de gaz de la source vers ledit réservoir 3a est effectuée successivement pour chaque réservoir 3 dudit groupe, et non pas pour plusieurs réservoirs 3 en même temps. Ainsi les réservoirs 3 du groupe passent chacun à leur tour par cette étape, puis suivent le même cycle simultanément, chacun avec un décalage temporel par rapport aux autres.

Au cours de ce procédé, la compression thermique du gaz se fait en ouvrant le moyen de transfert entre deux réservoirs 3, le réservoir 3 dans lequel le gaz est le plus comprimé permettant au gaz dans l'autre réservoir de monter en pression. Le réservoir qui reçoit le gaz est dans un état froid et le réservoir qui donne le gaz est dans un état chaud. Ceci permet qu'avec un nombre de moles équivalent de gaz dans les deux réservoirs, le réservoir chaud ait une pression supérieure et puisse donner du gaz et augmenter la pression dans le réservoir froid. Au cours de chaque cycle, chaque réservoir 3 passe ainsi par une montée en pression dans un état froid, puis une descente en pression dans un état chaud. Au cours d'un cycle suivi par un réservoir 3, celui-ci n'a donc besoin d'être réchauffé et refroidi qu'une fois.

De préférence lors de l'étape de transfert de gaz d'un autre réservoir 3 du même groupe dont le gaz est à une pression et une température supérieures vers ledit réservoir, le gaz transféré est refroidi. Ceci permet de conserver une température froide dans le réservoir 3 qui reçoit le gaz chaud, et de conserver ainsi le différentiel de température avec les autres réservoirs 3 chauds. Le gaz transféré peut être refroidi avant son arrivée dans le réservoir 3, par exemple dans le moyen de transfert bidirectionnel 7 entre les deux réservoirs 3. Alternativement, le gaz transféré peut être refroidi après son arrivée dans le réservoir 3, en refroidissant l'ensemble du contenu du réservoir 3, par exemple par le moyen de refroidissement 5. Dans un mode de réalisation préféré de l'invention, le contenu d'un réservoir 3 refroidi à la température froide T₁ est conservé à la température froide T₁ jusqu'à l'étape de réchauffement. De même, le contenu d'un réservoir 3 réchauffé à la température chaude T₂ est de préférence conservé à la température chaude T₂ jusqu'à l'étape de refroidissement. Ceci permet de toujours bénéficier du différentiel de température entre T1 et T2 lorsque l'on connecte un réservoir 3 chaud à un réservoir 3 froid pour faire monter ce dernier en pression.

Afin d'optimiser le cycle du procédé selon l'invention, au moins deux étapes du procédé peuvent être réalisées simultanément. une première étape incluant un transfert de gaz entre une première et une deuxième entité, ces deux entités étant la source 1 et un réservoir 3, deux réservoirs 3, ou un réservoir 3 et la cible 2, et une deuxième étape incluant un transfert de gaz entre une troisième et une quatrième entité, ces deux entités étant la source 1 et un réservoir 3, deux réservoirs 3, ou un réservoir 3 et la cible 2, la première, deuxième, troisième et quatrième entités étant quatre entités distinctes.

Par exemple, l'étape de transfert de gaz de la source 1 vers un premier réservoir 3a, ..., 3h a lieu simultanément avec l'étape de transfert de gaz d'un deuxième réservoir 3a, ..., 3h vers un réservoir receveur 3 ou vers la cible 2. Ainsi lorsque certains réservoirs 3 du système effectuent certaines étapes, d'autres réservoirs 3 effectuent d'autres étapes du procédé, ce qui permet de gagner du temps.

Dans un mode de réalisation préféré de l'invention, afin d'optimiser la consommation en énergie du procédé, lors de l'étape de refroidissement du gaz contenu dans un premier réservoir 3a, ..., 3h, il est possible d'utiliser de la chaleur extraite dudit premier réservoir 3a, ..., 3h dans l'étape de réchauffement du gaz contenu dans un deuxième réservoir 3a, ..., 3h. On peut par exemple faire circuler un fluide caloporteur du premier réservoir 3a, ..., 3h vers le deuxième réservoir 3a, ..., 3h.

Un groupe de réservoirs 3 comporte au moins deux réservoirs 3, par exemple trois, de préférence quatre réservoirs 3. Le choix du nombre de réservoirs 3 se fait, avec les autres paramètres du système, en fonction du nombre d'étages nécessaires pour comprimer le gaz de la pression P₀ à la source 1 à la pression P_{cible} voulue à la cible 2. Les autres paramètres à ajuster sont notamment les volumes des réservoirs 3, et les températures T₁ et T₂ à laquelle les réservoirs 3 sont réchauffés et refroidis. Il est avantageux d'avoir un nombre pair de réservoirs 3 dans un groupe. Ceci permet qu'à chaque étape du procédé, une des étapes du procédé ait lieu dans chaque réservoir 3.

Le système peut comporter un groupe unique de réservoirs 3, de préférence il comporte deux groupes de réservoirs 3. En effet le nombre total d'étapes du cycle décrit ci-dessus, en comptant les répétitions de la deuxième et la quatrième étape, est égal au double du nombre de réservoirs 3 dans un groupe. Lorsque le système comprend un groupe unique, seule la moitié des étapes peuvent donc être effectuées au même moment par un des réservoirs 3. Les étapes de transfert de gaz de la source 1 et vers la cible 2, notamment, n'ont pas lieu pour un groupe unique à chaque étape du cycle. Il peut donc être prévu d'avoir deux groupes opérant en parallèle, ce qui permet d'avoir, à chaque étape du cycle, du gaz transféré de la source 1 vers un des réservoirs 3 du système, et d'un des réservoirs 3 du système vers la cible 2. Le nombre de réservoirs dans chaque groupe peut être différent, mais afin d'obtenir l'avantage cité ci-dessus pour deux groupes, il est nécessaire que les deux groupes aient soit un nombre pair, soit un nombre impair de réservoirs.

Selon un mode de réalisation particulier, on peut prévoir des réservoirs 3 supplémentaires pour permettre d'effectuer le réchauffement et le refroidissement en plusieurs étapes. Ceci est intéressant si les étapes de réchauffement et refroidissement prennent plus de temps que les étapes de transfert ; typiquement si ces étapes prennent deux fois plus de temps que les étapes de transfert, il peut être intéressant d'effectuer le réchauffement et le refroidissement en deux étapes.

Selon un autre mode de réalisation particulier, on peut prévoir une installation qui fonctionne dans un premier temps entre une première pression de source P0 et une pression cible P1. Puis dans un deuxième temps, on peut prélever une partie du gaz à la pression P1 et en faire une source à la pression P1. Le dispositif élève alors la pression à une pression P2. On peut poursuivre en autant de temps que nécessaire pour atteindre finalement la pression cible visée.

Dans un mode de réalisation préféré de l'invention, la pression du gaz à la source P₀ est comprise entre 400 et 600 bars, par exemple en provenance d'un compresseur à hydrures métallique, et la pression du gaz à la cible P_{cible} est comprise entre 800 et 1000 bars. On peut prévoir, dans ce mode de réalisation, deux groupes de quatre réservoirs 3, la montée en pression dans un réservoir 3a s'effectuant par exemple par les étages suivants : 500 bars à la source, puis 560 bars, 635 bars, 725 bars après les trois étapes de transfert d'un autre réservoir 3 chaud, puis un dernier étage menant à 810 bars lors du réchauffement du réservoir 3a. De préférence, les températures de refroidissement T ₁ et de réchauffement T₂ du gaz sont comprises respectivement entre 280 et 310 K, par exemple 293,15 K, et entre 360 et 390 K, par exemple 373,15K. Ces températures peuvent bien sûr être utilisées avec d'autres valeurs de pression.

Afin d'optimiser la consommation d'énergie, la température de refroidissement T₁ peut-être la plus basse possible, c'est à-dire par exemple la température ambiante ou la température de la source de froid la plus basse disponible sur le site d'utilisation. Si du gaz liquéfié tel que de l'azote liquide est disponible sur le site, ou un retour de circuit d'eau glacée, ou d'autres fluides froids, ils peuvent par exemple être utilisés. Par gaz liquéfié, on entend un produit qui se trouverait à l'état gazeux lorsqu'il est à pression atmosphérique et à température ambiante, par exemple 20°C, et qui est refroidi afin d'être à l'état liquide.

On peut aussi relier la source 1 à une sortie de gaz d'évaporation d'un stockage de dihydrogène liquide (boil-off gas), qui est à une température de 15K, ce qui permet d'apporter du dihydrogène froid au réservoir qui doit être alimenté par la source.

Le système selon l'invention est particulièrement avantageux pour des installations de petite taille, avec un débit de sortie de gaz à la cible 2 par exemple compris entre 1 et 100 kg par heure.

D'autres applications sont possibles en termes de pression/température :
- source reliée à une sortie de gaz d'évaporation d'un stockage de dihydrogène liquide (boil-off gas) :
   - pression P₀ à la source 1 : entre 0,5 et 10 bars,
   - pression P_{cible} à la cible 2 : entre 5 et 450 bars,
   - température de refroidissement T₁ : entre 15 et 300 K,
   - température de réchauffement T₂ : entre 300 et 400 K.
- source reliée à une sortie de dihydrogène fatal, coproduit par une installation industrielle :
   - pression P₀ à la source 1 : entre 0,5 et 3 bars,
   - pression P_{cible} à la cible 2 : entre 20 et 500 bars,
   - température de refroidissement T₁ : entre 253 et 353 K,
   - température de réchauffement T₂ : entre 353 et 1000 K.
- source reliée à un électrolyseur basse température :
   - pression P₀ à la source 1 : entre 1 et 50 bars,
   - pression P_{cible} à la cible 2 : entre 2 et 200 bars,
   - température de refroidissement T₁ : entre 253 et 293 K,
   - température de réchauffement T₂ : entre 333 et 393 K.
- source reliée à un électrolyseur haute température :
   - pression P₀ à la source 1 : entre 1 et 30 bars,
   - pression P_{cible} à la cible 2 : entre 2 et 200 bars,
   - température de refroidissement T₁ : entre 253 et 293 K,
   - température de réchauffement T₂ : entre 333 et 1073 K.
- source reliée à un compresseur thermochimique, par exemple à hydrures métalliques :
   - pression P₀ à la source 1 : entre 200 et 500 bars,
   - pression P_{cible} à la cible 2 : entre 400 et 1000 bars,
   - température de refroidissement T₁ : entre 253 et 293 K,
   - température de réchauffement T₂ : entre 353 et 423 K.
- source reliée à une sortie de bouteilles de gaz :
   - pression P₀ à la source 1 : entre 50 et 500 bars,
   - pression P_{cible} à la cible 2 : entre 100 et 1000 bars,
   - température de refroidissement T₁ : entre 253 et 293 K,
   - température de réchauffement T₂ : entre 353 et 500 K.
- source reliée à une unité de production de dihydrogène par biomasse :
   - pression P₀ à la source 1 : entre 1 et 5 bars,
   - pression P_{cible} à la cible 2 : entre 2 et 50 bars,
   - température de refroidissement T₁ : entre 253 et 293 K,
   - température de réchauffement T₂ : entre 353 et 1073 K.

La [Fig.2] illustre un exemple de mode de réalisation dans lequel le système selon l'invention comporte un groupe de deux réservoirs 3a, 3b. Les volumes des réservoirs 3a, 3b sont égaux. Sur la [Fig.2], les flèches illustrent les flux de gaz. L'état de chaque réservoir est noté après que les transferts de gaz soient terminés.

Le cycle comporte quatre étapes :
- étape A :
   - le gaz contenu dans le réservoir 3a est chauffé à la température T₂ et une partie de ce gaz est transféré vers la cible 2. A l'issue de cette étape, le réservoir 3a contient n₀ moles de gaz, à pression P₂ = P_{cible}, et à température T₂.
   - le gaz contenu dans le réservoir 3b est refroidi à la température T₁ et du gaz est transféré de la source 1 vers le réservoir 3b. A l'issue de cette étape, le réservoir 3b contient n₀ moles de gaz, à pression P₀, et à température T₁.
- étape B :
   - le moyen de transfert bidirectionnel 7 est ouvert entre les réservoirs 3a et 3b, ce qui provoque un transfert de gaz du réservoir 3a vers le réservoir 3b. A l'issue de cette étape, le réservoir 3a contient n₋₁ moles de gaz, à pression P₁, et à température T₂, et le réservoir 3b contient n₁ moles de gaz, à pression P₁, et à température T₁.

Les étapes C et D sont identiques aux étapes A et B, en intervertissant les réservoirs 3a et 3b. A l'issue de l'étape D, le cycle peut reprendre à l'étape A.

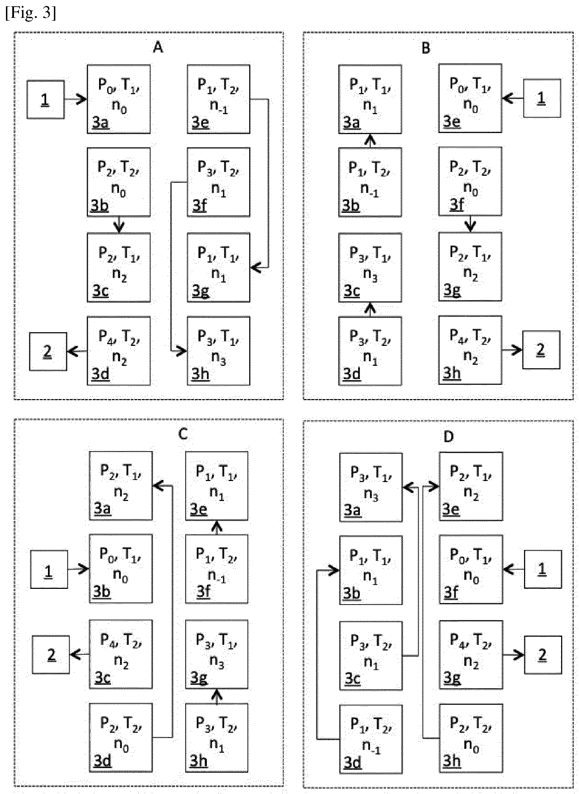

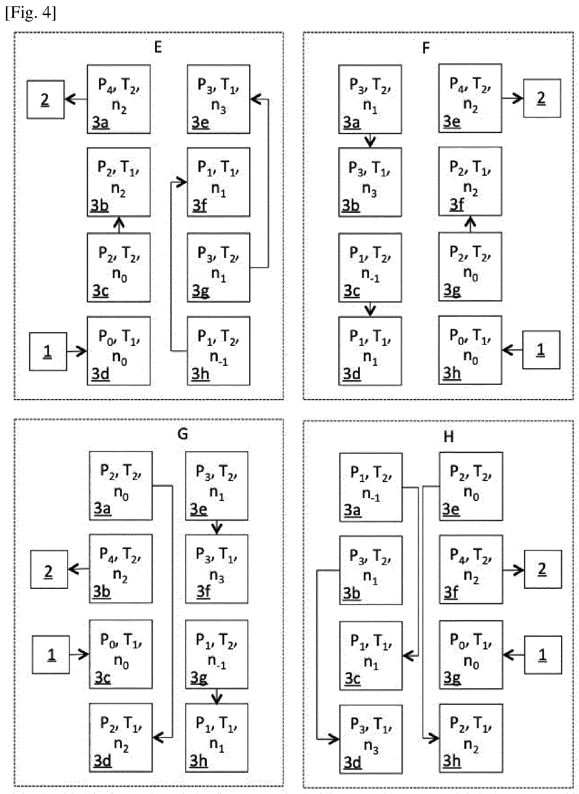

Les figures 3 et 4 illustrent un exemple de mode de réalisation dans lequel le système selon l'invention comporte deux groupes de quatre réservoirs 3a à 3d et 3e à 3h. Les volumes des réservoirs 3a à 3d sont égaux. Les volumes des réservoirs 3e à 3h sont égaux. Sur les figures 3 et 4, les flèches illustrent les flux de gaz. L'état de chaque réservoir est noté après que les transferts de gaz soient terminés.

Le cycle comporte huit étapes A à H. Nous allons décrire le cycle suivi par le réservoir 3a :
- étape A : le gaz contenu dans le réservoir 3a est refroidi à la température T₁ et du gaz est transféré de la source 1 vers le réservoir 3a. A l'issue de cette étape, le réservoir 3a contient n₀ moles de gaz, à pression P₀, et à température T₁,
- étape B : le moyen de transfert bidirectionnel 7 est ouvert entre les réservoirs 3a et 3b, ce qui provoque un transfert de gaz du réservoir 3b vers le réservoir 3a. A l'issue de cette étape, le réservoir 3a contient n₁ moles de gaz, à pression P₁, et à température T₁.
- étape C : le moyen de transfert bidirectionnel 7 est ouvert entre les réservoirs 3a et 3d, ce qui provoque un transfert de gaz du réservoir 3d vers le réservoir 3a. A l'issue de cette étape, le réservoir 3a contient n₂ moles de gaz, à pression P₂, et à température T₁.
- étape D : le moyen de transfert bidirectionnel 7 est ouvert entre les réservoirs 3a et 3c, ce qui provoque un transfert de gaz du réservoir 3c vers le réservoir 3a. A l'issue de cette étape, le réservoir 3a contient n₃ moles de gaz, à pression P₃, et à température T₁.
- étape E : le gaz contenu dans le réservoir 3a est chauffé à la température T₂ et une partie de ce gaz est transféré vers la cible 2. A l'issue de cette étape, le réservoir 3a contient n₂ moles de gaz, à pression P₄ = P_{cible}, et à température T₂.
- étape F : le moyen de transfert bidirectionnel 7 est ouvert entre les réservoirs 3a et 3b, ce qui provoque un transfert de gaz du réservoir 3a vers le réservoir 3b. A l'issue de cette étape, le réservoir 3a contient n₁ moles de gaz, à pression P₃, et à température T₂.
- étape G : le moyen de transfert bidirectionnel 7 est ouvert entre les réservoirs 3a et 3d, ce qui provoque un transfert de gaz du réservoir 3a vers le réservoir 3d. A l'issue de cette étape, le réservoir 3a contient n₀ moles de gaz, à pression P₂, et à température T₂.
- étape H : le moyen de transfert bidirectionnel 7 est ouvert entre les réservoirs 3a et 3c, ce qui provoque un transfert de gaz du réservoir 3a vers le réservoir 3c. A l'issue de cette étape, le réservoir 3a contient n₋₁ moles de gaz, à pression P₁, et à température T₂. A l'issue de l'étape H, le cycle peut reprendre à l'étape A.

Tous les réservoirs 3a à 3h suivent le cycle ci-dessus, en échangeant bien sûr avec les réservoirs 3 pertinents à chaque étape de transfert :
- le réservoir 3b commence le cycle ci-dessus à l'étape C,
- le réservoir 3c commence le cycle ci-dessus à l'étape G,
- le réservoir 3d commence le cycle ci-dessus à l'étape E,
- le réservoir 3e commence le cycle ci-dessus à l'étape B,
- le réservoir 3f commence le cycle ci-dessus à l'étape D,
- le réservoir 3g commence le cycle ci-dessus à l'étape H,
- le réservoir 3h commence le cycle ci-dessus à l'étape F,

La présence de deux groupes dans le système permet ici d'avoir, lors de chaque étape du cycle, un réservoir 3 recevant du gaz de la source 1 et un réservoir 3 envoyant du gaz vers la cible 2. En effet par exemple à l'étape A c'est le réservoir 3d du premier groupe de réservoirs 3 qui envoie du gaz vers la cible 2, à l'étape B c'est le réservoir 3h du deuxième groupe de réservoirs 3, puis à l'étape C le réservoir 3c du premier groupe de réservoirs 3, et ainsi de suite. Par ailleurs, à l'étape A c'est le réservoir 3a, du premier groupe de réservoirs 3, qui reçoit du gaz venant de la source 1, à l'étape B c'est le réservoir 3e du deuxième groupe de réservoirs 3, puis à l'étape C le réservoir 3b du premier groupe de réservoirs 3, et ainsi de suite.

En considérant cet exemple de réalisation, et en effectuant les étapes de réchauffement et refroidissement sur la durée de deux étapes de transfert, cela conduit à prévoir dix réservoirs 3 au lieu de huit. Les dix réservoirs constituent alors un seul groupe, et chaque réservoir 3 peut être mis en lien avec trois autres réservoirs 3 parmi les dix, par des moyens de transfert bidirectionnels ; chaque réservoir 3 doit bien entendu aussi être mis en lien avec la source et la cible par des moyens de transfert.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Procédé cyclique de compression thermique d'un gaz dans une pluralité de réservoirs (3) d'au moins un groupe de réservoirs (3), chaque cycle comportant pour chaque réservoir (3a, ..., 3h) de ladite pluralité de réservoirs (3) les étapes suivantes :
- refroidissement du gaz contenu dans le réservoir (3a, ..., 3h) et transfert de gaz de la source (1) vers ledit réservoir (3a, ..., 3h),
- transfert de gaz d'un réservoir donneur (3) vers ledit réservoir (3a, ..., 3h), ledit réservoir donneur (3) étant à une pression et une température supérieures au gaz dudit réservoir (3a, ..., 3h) et du même groupe, de préférence ledit réservoir donneur (3) étant celui dont le gaz est à la pression la plus basse parmi les réservoirs (3) dudit groupe dont le gaz est à une pression et une température supérieures au gaz dudit réservoir (3a, ..., 3h), jusqu'à égalisation des pressions dans ledit réservoir (3a, ..., 3h) et ledit réservoir donneur (3), le cas échéant, répétition de cette étape tant qu'il y a un autre réservoir (3) dudit groupe dont le gaz est à une pression et une température supérieures au gaz dudit réservoir (3a, ..., 3h),
- réchauffement du gaz contenu dans le réservoir (3a, ..., 3h) et transfert de gaz dudit réservoir (3a, ..., 3h) vers la cible (2),
- transfert de gaz dudit réservoir (3a, ..., 3h) vers un réservoir receveur (3), ledit réservoir receveur (3) étant à une pression et une température inférieures au gaz dudit réservoir (3a, ..., 3h), de préférence ledit réservoir receveur (3) étant celui dont le gaz est à la pression la plus haute parmi les réservoirs (3) dudit groupe dont le gaz est à une pression et une température inférieures au gaz dudit réservoir (3a, ..., 3h), jusqu'à égalisation des pressions dans ledit réservoir (3a, ..., 3h) et ledit réservoir receveur (3), le cas échéant, répétition de cette étape tant qu'il y a un autre réservoir (3) dudit groupe dont le gaz est à une pression et une température inférieures au gaz dudit réservoir (3a, ..., 3h),
l'étape de refroidissement du gaz contenu dans le réservoir (3a, ..., 3h) et transfert de gaz de la source vers ledit réservoir (3a, ..., 3h) étant effectuée successivement pour chaque réservoir (3) dudit groupe.

2. Procédé selon la revendication précédente, dans lequel lors de l'étape de transfert de gaz d'un réservoir donneur (3) du même groupe dont le gaz est à une pression et une température supérieures vers ledit réservoir (3), le gaz transféré est refroidi pour réduire la montée en température du contenu dudit réservoir (3).

3. Procédé selon l'une des revendications précédentes comportant en outre une étape de compression du gaz, avant son transfert de la source (1) vers un réservoir, dans un compresseur à hydrures métalliques.

4. Procédé selon l'une des revendications précédentes, dans lequel lors de l'étape de refroidissement du gaz contenu dans un premier réservoir (3a, ..., 3h), de la chaleur est extraite dudit premier réservoir (3a, ..., 3h) et est utilisée dans l'étape de réchauffement du gaz contenu dans un deuxième réservoir (3a, ..., 3h).

5. Procédé selon l'une des revendications précédentes, dans lequel au moins deux étapes de transfert de gaz sont réalisées en même temps, la première concernant deux entités parmi la source, la cible et un réservoir, la deuxième concernant deux entités non concernées par la première

6. Procédé selon l'une des revendications précédentes, dans lequel l'étape de transfert de gaz de la source (1) vers un premier réservoir (3) a lieu simultanément avec l'étape de transfert de gaz d'un deuxième réservoir (3) vers un réservoir receveur (3) ou vers la cible (2).

7. Système configuré pour mettre en œuvre un procédé de compression thermique d'un gaz selon la revendication 5 comportant une source (1), une cible (2), et au moins un groupe de réservoirs (3) comprenant chacun au moins deux réservoirs (3), ledit système comportant en outre un moyen de chauffage (4) et un moyen de refroidissement (5) du contenu de chaque réservoir, chaque groupe comportant encore :
- des moyens de transfert (6a, 6b) permettant de transférer du gaz directement de ladite source (1) à chaque réservoir (3) et directement de chaque réservoir (3) à ladite cible (2), et
- pour chaque réservoir (3) dudit groupe, des moyens de transfert bidirectionnels (7) permettant de transférer du gaz directement entre ce réservoir (3) et au moins un autre réservoir (3) dudit groupe.

8. Système selon la revendication précédente, dans lequel ledit gaz est un dihydrogène.

9. Système selon l'une des revendications 7 à 8, comportant deux groupes de réservoirs (3).

10. Système selon l'une des revendications 7 à 9 comportant au moins trois, de préférence au moins quatre réservoirs (3) dans chaque groupe.

11. Système selon l'une des revendications 7 à 10, dans lequel le moyen de chauffage (4) comporte une source de chaleur fatale par exemple une installation de production de dihydrogène par biomasse ou un électrolyseur.

12. Système selon l'une des revendications 7 à 11, dans lequel le moyen de refroidissement (5) comporte une source de froid fatal, par exemple un stockage d'azote liquide ou un retour d'une boucle d'eau glacée.

13. Système selon l'une des revendications 7 à 12, dans lequel la source (1) comporte une sortie de gaz d'évaporation d'un stockage de dihydrogène liquide.

14. Système selon l'une des revendications 7 à 13, dans lequel tous les réservoirs (3) d'un même groupe ont le même volume.

## Patentansprüche

1. Zyklisches Verfahren zur thermischen Kompression eines Gases in einer Vielzahl von Behältern (3) mindestens einer Gruppe von Behältern (3), wobei jeder Zyklus für jeden Behälter (3a, ..., 3h) der genannten Vielzahl von Behältern (3) die folgenden Schritte umfasst:
- Abkühlen des im Behälter (3a, ..., 3h) enthaltenen Gases und Übertragen von Gas von der Quelle (1) in den genannten Behälter (3a, ..., 3h),
- Gasübertragung von einem Spenderbehälter (3) zu dem genannten Behälter (3a, ..., 3h), wobei der genannte Spenderbehälter (3) einen höheren Druck und eine höhere Temperatur aufweist als das Gas in dem genannten Behälter (3a, ..., 3h) und derselben Gruppe, wobei der Spenderbehälter (3) vorzugsweise derjenige ist, dessen Gas den niedrigsten Druck unter den Behältern (3) dieser Gruppe aufweist, deren Gas einen höheren Druck und eine höhere Temperatur als das Gas des Behälters (3a, ..., 3h) aufweist, bis sich die Drücke in den genannten Behältern (3a, ..., 3h) und dem genannten Spenderbehälter (3) angeglichen haben, gegebenenfalls Wiederholung dieses Schritts, solange es einen weiteren Behälter (3) der genannten Gruppe gibt, dessen Gas einen höheren Druck und eine höhere Temperatur aufweist als das Gas der genannten Behälter (3a, ..., 3h),
- Erwärmung des im Behälter (3a, ..., 3h) enthaltenen Gases und Übertragung von Gas aus dem genannten Behälter (3a, ..., 3h) zum Ziel (2),
- Gasübertragung aus dem genannten Behälter (3a, ..., 3h) in einen Auffangbehälter (3), wobei der Aufnahmebehälter (3) einen Druck und eine Temperatur aufweist, die niedriger sind als die des Gases in dem Behälter (3a, ..., 3h), vorzugsweise ist der Aufnahmebehälter (3) derjenige, dessen Gas den höchsten Druck unter den Behältern (3) der Gruppe aufweist, deren Gas einen Druck und eine Temperatur aufweist, die niedriger sind als die des Gases in dem Behälter (3a, ..., 3h), bis sich die Drücke in den Behältern (3a, ..., 3h) und dem Auffangbehälter (3) angeglichen haben; gegebenenfalls Wiederholung dieses Schritts, solange es einen weiteren Behälter (3) aus der Gruppe gibt, dessen Gas einen niedrigeren Druck und eine niedrigere Temperatur als das Gas in den Behältern (3a, ..., 3h) aufweist,
wobei der Schritt des Abkühlens des im Behälter (3a, ..., 3h) enthaltenen Gases und der Schritt des Gastransfers von der Quelle zu dem Behälter (3a, ..., 3h) nacheinander für jeden Behälter (3) der Gruppe durchgeführt werden.

2. Verfahren nach dem vorstehenden Anspruch, bei dem während des Schritts der Gasübertragung von einem Spenderbehälter (3) derselben Gruppe, dessen Gas einen höheren Druck und eine höhere Temperatur aufweist, zu dem genannten Behälter (3) das übertragene Gas gekühlt wird, um den Temperaturanstieg des Inhalts des genannten Behälters (3) zu verringern.

3. Verfahren nach einem der vorstehenden Ansprüche, das ferner einen Schritt zum Komprimieren des Gases in einem Metallhydridkompressor vor dessen Übertragung von der Quelle (1) zu einem Behälter umfasst.

4. Verfahren nach einem der vorstehenden Ansprüche, bei dem während des Schritts zum Kühlen des in einem ersten Behälter (3a, ..., 3h) enthaltenen Gases Wärme aus dem ersten Behälter (3a, ..., 3h) entzogen und im Schritt zum Erwärmen des in einem zweiten Behälter (3a, ..., 3h) enthaltenen Gases verwendet wird.

5. Verfahren nach einem der vorstehenden Ansprüche, bei dem mindestens zwei Gasübertragungsschritte gleichzeitig durchgeführt werden, wobei der erste zwei der folgenden Einheiten betrifft: die Quelle, das Ziel und einen Behälter, und der zweite zwei Einheiten betrifft, die nicht vom ersten Schritt betroffen sind

6. Verfahren nach einem der vorstehenden Ansprüche, bei dem der Schritt des Gastransfers von der Quelle (1) zu einem ersten Behälter (3) gleichzeitig mit dem Schritt des Gastransfers von einem zweiten Behälter (3) zu einem Aufnahmebehälter (3) oder zum Ziel (2) stattfindet.

7. System zur Durchführung eines Verfahrens zur thermischen Kompression eines Gases gemäß Anspruch 5, umfassend eine Quelle (1), ein Ziel (2) und mindestens eine Gruppe von Behältern (3), die jeweils mindestens zwei Behälter (3) umfassen, wobei das System ferner eine Heizeinrichtung (4) und eine Kühleinrichtung (5) für den Inhalt jedes Behälters umfasst, wobei jede Gruppe zudem umfasst:
- Übertragungsvorrichtungen (6a, 6b), die es ermöglichen, Gas direkt von der Quelle (1) zu jedem Behälter (3) und direkt von jedem Behälter (3) zum Ziel (2) zu übertragen, und
- für jeden Behälter (3) der Gruppe bidirektionale Übertragungsvorrichtungen (7), die es ermöglichen, Gas direkt zwischen diesem Behälter (3) und mindestens einem anderen Behälter (3) der Gruppe zu übertragen.

8. System nach dem vorstehenden Anspruch, wobei das Gas Dihydrogen ist.

9. System nach einem der Ansprüche 7 bis 8, das zwei Gruppen von Behältern (3) umfasst.

10. System nach einem der Ansprüche 7 bis 9, das in jeder Gruppe mindestens drei, vorzugsweise mindestens vier Behälter (3) umfasst.

11. System nach einem der Ansprüche 7 bis 10, wobei die Heizeinrichtung (4) eine Abwärmequelle umfasst, beispielsweise eine Anlage zur Erzeugung von Dihydrogen aus Biomasse oder einen Elektrolyseur.

12. System nach einem der Ansprüche 7 bis 11, wobei die Kühleinrichtung (5) eine Abkühlungsquelle umfasst, beispielsweise einen Flüssigstickstoffspeicher oder einen Rücklauf aus einem Kaltwasserkreislauf.

13. System nach einem der Ansprüche 7 bis 12, wobei die Quelle (1) einen Verdampfungsgasauslass eines Speichers für flüssiges Dihydrogen umfasst.

14. System nach einem der Ansprüche 7 bis 13, wobei alle Behälter (3) einer gleichen Gruppe das gleiche Volumen aufweisen.

## Claims

1. A cyclic process for the thermal compression of a gas in a plurality of reservoirs (3) of at least one group of reservoirs (3), each cycle comprising for each reservoir (3a, ..., 3h) of said plurality of reservoirs (3) the following steps:
- cooling of the gas contained in the reservoir (3a, ..., 3h) and transfer of gas from the source (1) to said reservoir (3a, ..., 3h),
- transfer of gas from a donor reservoir (3) to said reservoir (3a, ..., 3h), said donor reservoir (3) being at a higher pressure and temperature than the gas of said reservoir (3a, ..., 3h) and of the same group, preferably said donor reservoir (3) being the one whose gas is at the lowest pressure among the reservoirs (3) of said group whose gas is at a higher pressure and temperature than the gas of said reservoir (3a, ..., 3h), until equalization of the pressures in said reservoir (3a, ..., 3h) and said donor reservoir (3), if necessary repeating this step for as long as there is another reservoir (3) of said group whose gas is at a higher pressure and temperature than the gas in said reservoir (3a, ..., 3h),
- heating of the gas contained in the reservoir (3a, ..., 3h) and transfer of gas from said reservoir (3a, ..., 3h) to the target (2),
- transfer of gas from said reservoir (3a, ..., 3h) to a receiving reservoir (3), said receiving reservoir (3) being at a lower pressure and temperature than the gas from said reservoir (3a, ..., 3h), preferably said receiving reservoir (3) being that whose gas is at the highest pressure among the reservoirs (3) of said group whose gas is at a lower pressure and temperature than the gas from said reservoir (3a, ..., 3h), until equalization of the pressures in said reservoir (3a, ..., 3h) and said receiving reservoir (3), if necessary repeating this step for as long as there is another reservoir (3) of said group whose gas is at a lower pressure and temperature than the gas in said reservoir (3a, ..., 3h),
the step of cooling the gas contained in the reservoir (3a, ..., 3h) and transferring gas from the source to said reservoir (3a, ..., 3h) being carried out successively for each reservoir (3) of said group.

2. Process according to the preceding claim, wherein during the step of transferring gas from a donor reservoir (3) of the same group whose gas is at a higher pressure and temperature to said reservoir (3), the transferred gas is cooled to reduce the temperature rise of the contents of said reservoir (3).

3. Process according to one of the preceding claims also comprising a gas compression step, prior to its transfer from the source (1) to a reservoir, in a metal hydride compressor.

4. Process according to one of the preceding claims, wherein during the step of cooling the gas contained in a first reservoir (3a, ..., 3h), heat is extracted from said first reservoir (3a, ..., 3h) and is used in the step of reheating the gas contained in a second reservoir (3a, ..., 3h).

5. Process according to one of the preceding claims, wherein at least two gas transfer steps are carried out in the same time, the first concerning two entities from among the source, the target and a reservoir, the second concerning two entities not concerned by the first.

6. Process according to one of the preceding claims, wherein the step of transferring gas from the source (1) to a first reservoir (3) takes place simultaneously with the step of transferring gas from a second reservoir (3) to a receiving reservoir (3) or to the target (2).

7. A system configured to implement a process for thermally compressing a gas according to claim 5, comprising a source (1), a target (2), and at least one group of reservoirs (3) each comprising at least two reservoirs (3), said system further comprising means for heating (4) and means for cooling (5) the contents of each reservoir, each group further comprising:
- transfer means (6a, 6b) for transferring gas directly from said source (1) to each reservoir (3) and directly from each reservoir (3) to said target (2), and
- for each reservoir (3) of said group, bidirectional transfer means (7) enabling gas to be transferred directly between this reservoir (3) and at least one other reservoir (3) of said group.

8. System according to the preceding claim, wherein said gas is dihydrogen.

9. System according to one of claims 7 to 8, comprising two groups of reservoirs (3).

10. System according to one of claims 7 to 9 with at least three, preferably at least four reservoirs (3) in each group.

11. System according to one of claims 7 to 10, wherein the heating means (4) comprises a source of waste heat, for example a biomass dihydrogen production plant or an electrolyzer.

12. System according to one of claims 7 to 11, wherein the cooling means (5) comprises a fatal cold source, for example a liquid nitrogen storage or a return from a chilled water loop.

13. System according to one of claims 7 to 12, wherein the source (1) comprises an evaporation gas outlet from a liquid dihydrogen storage.

14. System according to one of claims 7 to 13, wherein all reservoirs (3) in a group have the same volume.
